# EUROPEAN PATENT APPLICATION

(11) **EP 1 821 214 A1**
(43) Date of publication of application: **22.08.2007**
(21) Application number: 05799367.7
(22) Date of filing: 27.10.2005
(51) Int. Cl.: G06F 12/14, G06F 12/16, G06K 19/07

(54) **NONVOLATILE MEMORY SYSTEM**

(30) Priority: 10.11.2004 JP 2004325953
(71) Applicant: SHARP KABUSHIKI KAISHA, Osaka 545 (JP)
(72) Inventor: OGAWA, Ryuichi, Chiba 2900056 (JP)
(74) Representative: Brown, Kenneth Richard
(86) International application number: PCT/JP2005/019766
(87) International publication number: WO 2006/051692

(57) **Abstract**

A technique for preventing erroneous writing or erasing on a nonvolatile memory at a low cost without an external circuit when an arithmetic processing device operates erroneously. A nonvolatile memory system comprises a nonvolatile memory, a volatile memory storing programs including an operational instruction to alter a content of the nonvolatile memory, an arithmetic processing device controlling the nonvolatile memory and the volatile memory, first invalid instruction writing means writing an invalid instruction in place of the operational instruction at an address in the volatile memory storing the operational instruction for the nonvolatile memory at an initialization, controlling means writing the operational instruction at the address in the volatile memory stored with the invalid instruction and then operating the nonvolatile memory according to the operational instruction, and second invalid instruction writing means writing the invalid instruction at the address in the volatile memory after operating the nonvolatile memory.

## Description

### TECHNICAL FIELD

The present invention relates to a nonvolatile memory system and particularly to a nonvolatile memory system which comprises a nonvolatile memory, a volatile memory for storing programs including an operational instruction to alter a content of the nonvolatile memory, and an arithmetic processing device for controlling the action of both the nonvolatile memory and the volatile memory

### BACKGROUND ART

A type of IC cards where an IC chip (semiconductor integrated circuit) including a CPU, nonvolatile memories, and volatile memories are mounted on a plastic card has now become popular in the field since it is greater in the data storage size and higher in the security through encryption of the data than any commonly applicable magnetic card. Recently, the IC card on which, as the nonvolatile memory to be equipped with, a flash type EEPROM (flash memory) capable of storing a larger amount of data than a conventional EEPROM is mounted has been put into practical use.

A conventional flash memory has a data storage area arranged in blocks. When written data is to be replaced with new data on a flash memory, it is necessary to erase data stored in a block and then to rewrite the new data in the block. Also, when data is to be written or erased on a flash memory, it is not possible to perform the writing action or the erasing action, in accordance with a program stored in a single flash memory, directly on the flash memory itself. Therefore, a program including a write instruction or an erase instruction for a flash memory is usually transferred and saved in a volatile memory such as a RAM, and when data is to be written or erased on the flash memory, the writing and erasing on the flash memory is performed based on the write instruction or the erase instruction stored in the volatile memory.

An example of the prior art generally used for writing and erasing the data on a flash memory will be described referring to the relevant drawings.

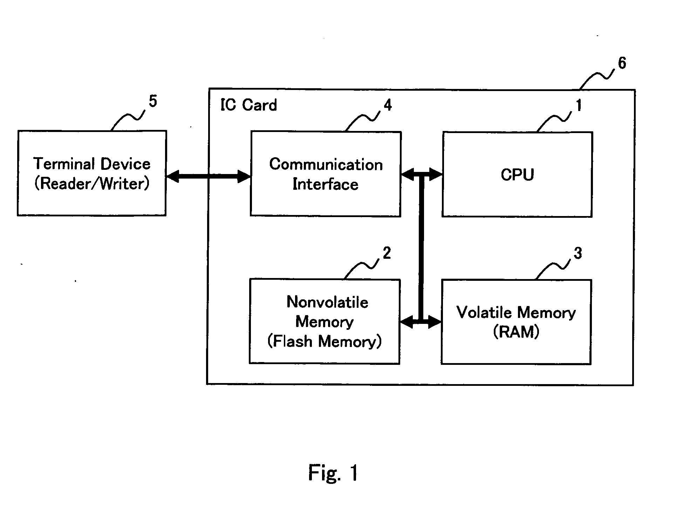

Fig. 1 illustrates an arrangement of a typical IC card system. The IC card 6 includes at least a CPU 1, a nonvolatile memory 2, a volatile memory 3, and a communication interface 4, and is operable by exchanging instructions with a terminal device 5 via a communication interface 4.

The CPU 1 controls each component on the IC card 6 in accordance with a control program stored in the nonvolatile memory 2. For example, when the IC card 6 receives via the communication interface 4 from the terminal device 5 an instruction for writing data on the nonvolatile memory 2, the CPU 1 executes the writing action on the nonvolatile memory 2 in accordance with the control program written on the nonvolatile memory 2, and after completing the writing action, transmits the result of the executed instruction via the communication interface 4 to the terminal device 5.

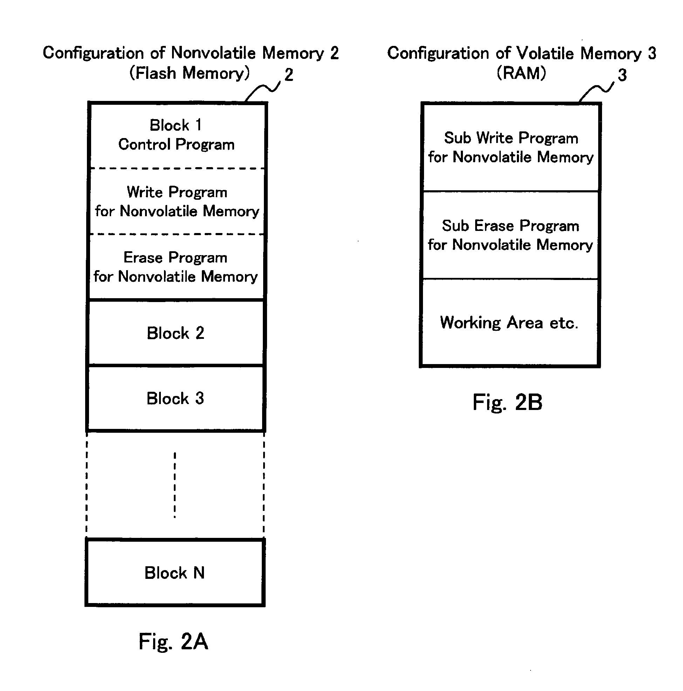

The nonvolatile memory 2 is composed of blocks 1 to N as shown in Fig. 2A. The nonvolatile memory 2 is provided as an addressed space to be accessed by the CPU 1, where the control program for the IC card 6 is previously stored in the block 1. The control program is composed of a set of instructions to be executed by the CPU 1, and includes a write program for writing data onto the nonvolatile memory 2, and an erase program for erasing the data from the nonvolatile memory 2. More particularly, the control program includes an initializing program for initializing the IC card 6. Also stored in the blocks 2 to N are an application program for enabling the service of the IC card 6 and various kinds of data.

The volatile memory 3 is provided as an addressed space to be accessed by the CPU 1 as shown in Fig. 2B. The volatile memory 3 is composed of an area for storing a sub write program which includes a write instruction for the nonvolatile memory 2, an area for storing a sub erase program which includes an erase instruction for the nonvolatile memory 2, and a working area.

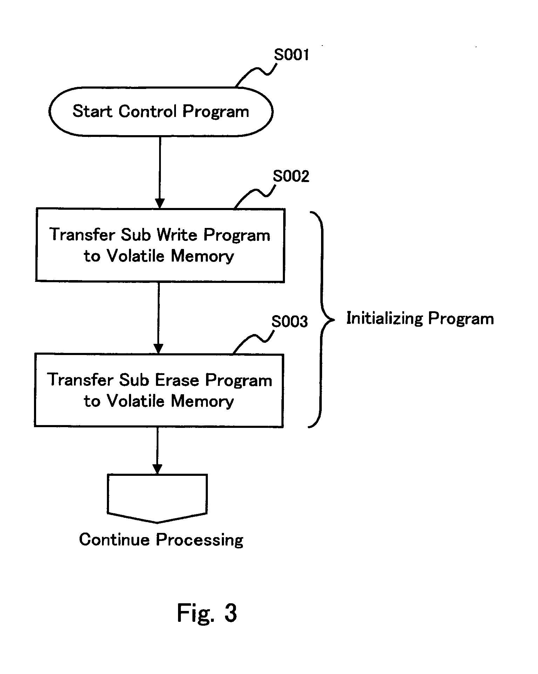

The operation of the control program by the CPU 1 will be described referring to Figs. 3 to 7.

Fig. 3 is a flowchart showing the operation of the initializing program at the time of starting execution of the control program stored in the nonvolatile memory 2. After starting the execution of the control program (Step S001), the CPU 1 executes the initializing program in the nonvolatile memory 2, transfers the sub write program for the nonvolatile memory 2 to the volatile memory 3 (Step S002), and transfers the sub erase program for the nonvolatile memory 2 to the volatile memory 3 (Step S003).

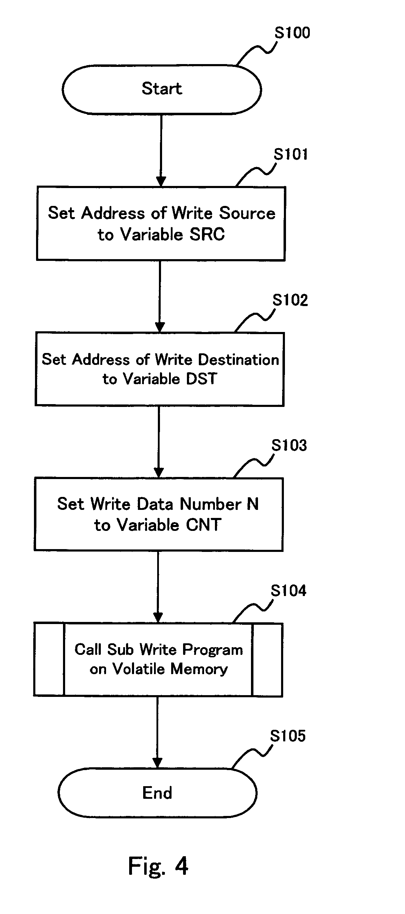

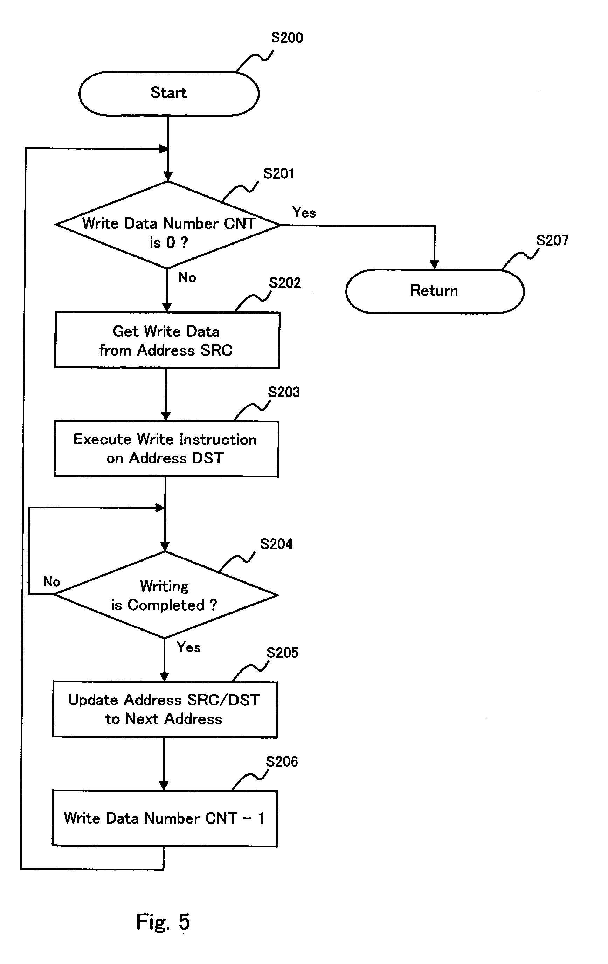

The action of writing data onto the nonvolatile memory 2 will be described referring to the flowcharts of Figs. 4 and 5.

Fig. 4 illustrates the operation of the write program for the nonvolatile memory 2 included in the control program which is stored in the nonvolatile memory 2. In accordance with the write program on the nonvolatile memory 2, the CPU 1 first sets the initial address of the area where the data to be written is stored, to a variable SRC (Step S101), sets the address on the nonvolatile memory 2 to which the data is written, to a variable DST (Step S102), and sets the number of the write data N to a variable CNT (Step S103). Then, the CPU 1 accesses the sub write program stored on the volatile memory 3 shown in Fig. 5 (Step S104).
After executing the program stored on the volatile memory 3, the CPU 1 terminates the write program for the nonvolatile memory 2 (Step S105).

Fig. 5 illustrates the operation of the sub write program for the nonvolatile memory 2 received by the volatile memory 3 at Step S002 shown in Fig. 3. First, the CPU 1 checks the number of the write data CNT (Step S201). When the number of the write data CNT is not zero in Step 5201, write data is acquired from the area denoted by the address SRC where the data to be written is stored (Step S202). Then, the write instruction is executed on the address DST denoting the area to which the data is written in the nonvolatile memory 2, and the data writing action is started (Step S203). When the completion of the writing action is confirmed (Yes in Step S204), the CPU 1 updates the values of the addresses SRC and DST to values of next addresses to prepare for the next data writing. For example, both the values of the addresses SRC and DST are increased by one (Step S205). Also, the number of the write data CNT is decreased by one (Step S206) and the procedure transits to Step S201 to continue the subsequent processing. When the CPU 1 determines at Step S201 that all the data have been written with the number of the write data CNT turned to zero, the sub write program is terminated (Step S207).

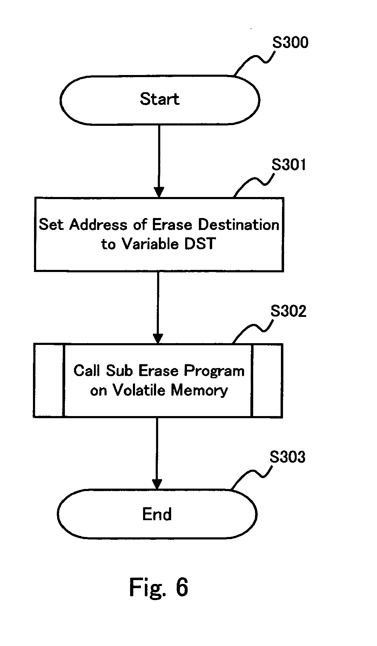

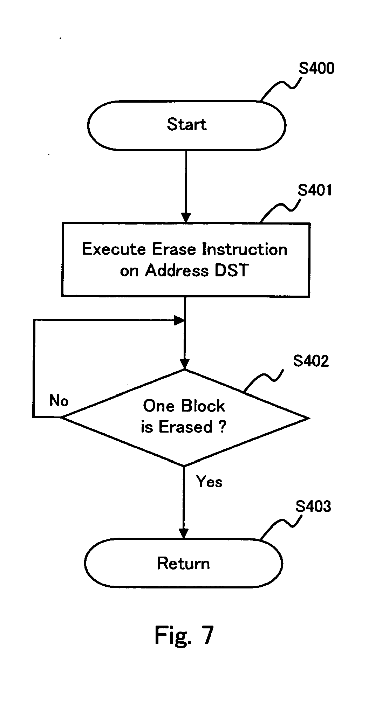

The action of erasing data on the nonvolatile memory 2 will now be described referring to the flowcharts shown in Figs. 6 and 7. Fig. 6 illustrates the operation of the erasing program included in the control program stored on the nonvolatile memory 2. In accordance with the erase program stored on the nonvolatile memory 2, the CPU 1 first sets the address of the area to be erased on the nonvolatile memory 2 to a variable DST (Step S301). Then, the CPU 1 accesses the sub erase program stored on the volatile memory 3 shown in Fig. 7 (Step S302). After executing the program stored on the volatile memory 3, the CPU 1 terminates the erase program for the nonvolatile memory 2 (Step S303).

Fig. 7 illustrates the operation of the sub erase program for the nonvolatile memory 2 previously transferred to the volatile memory 3 at Step S003 shown in Fig. 3. The CPU 1 executes the data erase instruction on the address DST denoting the area from which the data is to be erased in the nonvolatile memory 2, and starts the erasing action of the the data (Step S401). After confirming that the data has been erased (Yes at Step S402), the CPU 1 terminates the sub erase program (Step S403).

Since the IC card is designed for providing its nonvolatile memory with a written personal data, there is a demand for a technology for preventing erroneous action of writing or erasing of the data on its nonvolatile memory particularly when the CPU of the IC card runs away due to some reason.

However, according to the above-described prior art, the correct procedure of the write program and the erase program in the nonvolatile memory is not executed when the CPU erroneously operates due to some reason thus to erroneously access an address in the volatile memory where the sub write program and the sub erase program are stored, whereby an unintended action of writing or erasing of the data on the flash memory will be triggered, and in the worse case, the IC card itself may fail.

For such a prior art, a memory device is proposed as a technique for preventing erroneous writing action on the nonvolatile memory, which includes a nonvolatile memory, means for controlling the writing action and the reading action on the nonvolatile memory, and means for monitoring source voltage, so that the writing action is inhibited when the means for monitoring source voltage detects a fall in the source voltage during the writing action on the nonvolatile memory (see Patent Document 1). The memory device can prevent erroneous writing action on the nonvolatile memory without any external circuit. The memory device further includes memory means for storing the fact that the writing action has been inhibited and failed, and means for reading the stored contents from the memory means after the completion of the writing action on the nonvolatile memory, whereby it can be confirmed whether or not the writing action on the nonvolatile memory has been correctly finished.

Also, a data protecting device is proposed as a technology for preventing erroneous data altering actions on the nonvolatile memory which is caused by running away in processing the program, where, for example, when initializing a one-chip type microcomputer, a specific data is previously stored at a particular address in a RAM, and after confirming that the content at the specific address in the volatile RAM is identical with that at the time of the initialization, the writing action on a flash memory is started (see Patent Document 2). The data protecting device can inhibit erroneous writing action on the flash memory even if a sub routine program instruction for the writing action is erroneously executed due to the running away in the program processing, because the content at the specific address in the RAM is different from that at the time of the initialization which has been created intentionally, when the program processing in the one-chip microcomputer runs away

Patent Document 1: Japanese Patent Application Laid-open Publication No. HEI08-22422
Patent Document 2: Japanese Patent Application Laid-open Publication No. 2000-112826

### DISCLOSURE OF THE INVENTION

### PROBLEMS TO BE SOLVED BY THE INVENTION

The memory device of Patent Document 1 inhibits the writing action on the nonvolatile memory only when it detects a fall in the source voltage through monitoring the source voltage. The memory device hence cannot prevent erroneous writing action on the nonvolatile memory in the case where its CPU runs away with the source voltage remaining normal. Also, since the data protecting device of Patent Document 2 requires means for storing the content of the RAM at the time of initialization, an external circuit needs to be provided in order to implement the data protecting device, and the device will not be manufactured at a low cost.

The present invention has been developed in view of the above problems, and its object is to provide a technique for preventing erroneous writing or erasing action on the nonvolatile memory, with no help of an external circuit and at a low cost, even when the arithmetic processing device such as a CPU erroneously operates and its action is branched to a predetermined address in the volatile memory where the write or erase instruction is stored.

### MEANS FOR SOLVING THE PROBLEMS

A nonvolatile memory system according to the present invention provided for achievement of the foregoing object, comprises a nonvolatile memory, a volatile memory for storing programs including an operational instruction to alter a content of the nonvolatile memory, and an arithmetic processing device for controlling the nonvolatile memory and the volatile memory, and further comprises a first invalid instruction writing means for writing an invalid instruction in place of the operational instruction at a specific address in the volatile memory for storing the operational instruction for the nonvolatile memory at the time of initialization, a controlling means for writing the operational instruction at the specific address in the volatile memory where the invalid instruction is stored before starting an operation on the nonvolatile memory and operating the nonvolatile memory according to the operational instruction, and a second invalid instruction writing means for writing the invalid instruction at the specific address in the volatile memory after operating the nonvolatile memory

According to the above feature of the present invention, even when the arithmetic processing device erroneously operates and its action is incorrectly branched to the address in the volatile memory where the program including the operational instruction for the nonvolatile memory is stored, the invalid instruction stored in place of the operational instruction is executed. Therefore, the operation on the nonvolatile memory is not executed, thus preventing erroneous operation on the nonvolatile memory

Further, according to the nonvolatile memory system of the present invention, the program includes a write instruction for the nonvolatile memory, and the first invalid instruction writing means and the second invalid instruction writing means write the invalid instruction at the specific address in the volatile memory where the write instruction is stored.

According to the another feature, when the arithmetic processing device erroneously operates and its action is incorrectly branched to the address in the volatile memory where the write instruction for the nonvolatile memory is stored, the invalid instruction is stored at the specific address in the volatile memory in place of the write instruction for the nonvolatile memory, and the writing action on the nonvolatile memory is not executed, thereby preventing erroneous writing action on the nonvolatile **memory**.

According to any one of the above described features of the nonvolatile memory system of the present invention, the program includes an erase instruction for the nonvolatile memory, and the first invalid instruction writing means and the second invalid instruction writing means write the invalid instruction at the specific address in the volatile memory where the erase instruction is stored.

According to a further feature, when the arithmetic processing device erroneously operates and its action is incorrectly branched to the address of the volatile memory where the erase instruction for the nonvolatile memory is stored, the invalid instruction is stored at the specific address in the volatile memory in place of the erase instruction for the nonvolatile memory, and the erasing action on the nonvolatile memory is not executed, thus preventing erroneous erasing action on the nonvolatile memory.

According to the nonvolatile memory system of any one of the above described features of the present invention, the invalid instruction is an instruction for resetting the arithmetic processing device.

According to a still further feature, when the arithmetic processing device erroneously operates and its action is incorrectly branched to the address in the volatile memory where the operational instruction for the nonvolatile memory is stored, the reset instruction for the arithmetic processing device is stored at the address in the volatile memory in place of the operational instruction for the nonvolatile memory, and the arithmetic processing device is reset and the operation on the nonvolatile memory is not executed, thus preventing erroneous operation on the nonvolatile memory.

According to the nonvolatile memory system of any one of the above described features of the present invention, the invalid instruction is a no operation instruction for the arithmetic processing device.

According to a still further feature, when the arithmetic processing device erroneously operates and its action is incorrectly branched to the address in the volatile memory where the operational instruction for the nonvolatile memory is stored, the no operation instruction for the arithmetic processing device is stored at the address in the volatile memory in place of the operational instruction for the nonvolatile memory, and the operation on the nonvolatile memory is not executed. Thereby, the erroneous operation on the nonvolatile memory can be prevented.

According to the nonvolatile memory system of any one of the above described features of the present invention, the invalid instruction is an undefined instruction for the arithmetic processing device.

According to a still further feature, when the arithmetic processing device erroneously operates and its action is incorrectly branched to the address in the volatile memory where the operational instruction for the nonvolatile memory is stored, the undefined instruction for the arithmetic processing device is stored at the address in the volatile memory in place of the operational instruction for the nonvolatile memory, and the operation on the nonvolatile memory is not executed. Therefore, an execution error of the undefined instruction for the arithmetic processing device is detected, thus preventing erroneous operation on the nonvolatile memory

A nonvolatile memory controlling program according to the present invention includes program steps for executing functions of the respective means in the nonvolatile memory system according to any one of the foregoing features on a computer.

According to the nonvolatile memory controlling program of the present invention, all the above described functions and effects in the nonvolatile memory system according to the present invention can be achieved, and the erroneous operation on the nonvolatile memory can be prevented with no use of any external circuit and at a low cost.

### BRIEF DESCRIPTION OF THE DRAWINGS

Fig. 1 is a block diagram showing a structure of an IC card system.
Fig. 2 is an explanatory view showing structures of a nonvolatile memory and a volatile memory mounted on the IC card system.
Fig. 3 is a flowchart showing the initializing operation of the control program stored on the nonvolatile memory in a conventional IC card system.
Fig. 4 is a flowchart showing the operation of the control program for the nonvolatile memory in the conventional system.
Fig. 5 a flowchart showing the operation of a sub write program for the nonvolatile memory in the conventional system.
Fig. 6 is a flowchart showing the operation of the control program for the nonvolatile memory in the conventional system.
Fig. 7 is a flowchart showing the operation of a sub erase program for the nonvolatile memory in the conventional system.
Fig. 8 is a flowchart showing the initializing operation of a control program stored on the nonvolatile memory to be mounted on an IC card system according to the present invention.
Fig. 9 is an explanatory view showing a configuration of a sub write program transferred to a volatile memory mounted on the IC card system according to the present invention.
Fig. 10 is an explanatory view showing a configuration of a sub erase program transferred to the volatile memory mounted on the IC card system according to the present invention.
Fig. 11 is a flowchart showing the operation of a control program according to the present invention.
Fig. 12 is a flowchart showing the operation of a sub write program according to the present invention.
Fig. 13 is a flowchart showing the operation of a control program according to the present invention.
Fig. 14 is a flowchart showing the operation of a sub erase program according to the present invention.
Fig. 15 is a view showing a configuration of a sub write program in the volatile memory after replacement of instructions according to the present invention.
Fig. 16 is a view showing a configuration of a sub erase program in the volatile memory after replacement of instructions according to the present invention.

### DESCRIPTION OF NUMERALS

- 1: CPU
- 2: Nonvolatile memory
- 3: Volatile memory
- 4: Communication interface
- 5: Terminal device
- 6: IC card

### BEST MODE FOR CARRYING OUT THE INVENTION

One embodiment of the nonvolatile memory system according to the present invention (referred appropriately to as "inventive system" hereinafter) will be described referring to the relevant drawings.

The nonvolatile memory system according to the present embodiment is applied to an IC card system which comprises a nonvolatile memory, a volatile memory for storing a program including an operational instruction to alter a content of the nonvolatile memory, and an arithmetic processing device for controlling the nonvolatile memory and the volatile memory, and is provided in the form of a program executed on the IC card system operated by a CPU as an example of the arithmetic processing device.

The IC card system in the present embodiment has a hardware configuration similar to the typical hardware configuration of the conventional IC card system shown in Fig. 1. As shown in Fig. 1, the IC card 6 includes a CPU 1, a nonvolatile memory 2, a volatile memory 3, and a communication interface 4, and operates by exchanging instructions via the communication interface 4 with a terminal device 5.

The CPU 1 controls each component in the IC card 6 according to a control program stored on the nonvolatile memory 2. The operational instructions for altering the content of the nonvolatile memory 2 include a write instruction and an erase instruction. When the IC card 6 receives via the communication interface 4 from the terminal device 5 an instruction for altering the content of the nonvolatile memory 2, the CPU 1 executes the operation for altering the content of the nonvolatile memory 2, that is, executing at least either of the write instruction or the erase instruction according to the control program written on the nonvolatile memory 2, and after the completion of the operation, the CPU 1 transmits a result of the executed instruction via the communication interface 4 to the terminal device 5.

The nonvolatile memory 2 is composed of blocks 1 to N as shown in Fig. 2A. The nonvolatile memory 2 is provided as an addressed space to be accessed by the CPU 1, where the control program for the IC card 6 is previously stored in the block 1. The control program is composed of a set of instructions to be executed by the CPU 1, and includes a write program for writing data onto the nonvolatile memory 2, and an erase program for erasing data on the nonvolatile memory 2. In the present embodiment, the control program further includes an initializing program for executing initializing operation of the IC card 6. Also stored in the blocks 2 to N are an application program for enabling the service of the IC card 6 and various kinds of data.

The volatile memory 3 is provided as an addressed space to be accessed by the CPU 1 as shown in Fig. 2B. The volatile memory 3 is composed of an area for storing a sub write program which includes the write instruction for the nonvolatile memory 2, an area for storing a sub erase program which includes the erase instruction for the nonvolatile memory 2, and other working areas, etc. The sub programs are previously stored on the nonvolatile memory 2 and is transferred from the nonvolatile memory 2 to a predetermined area in the volatile memory 3 in the initializing program when the control program stored on the nonvolatile memory 2 is started to be executed.

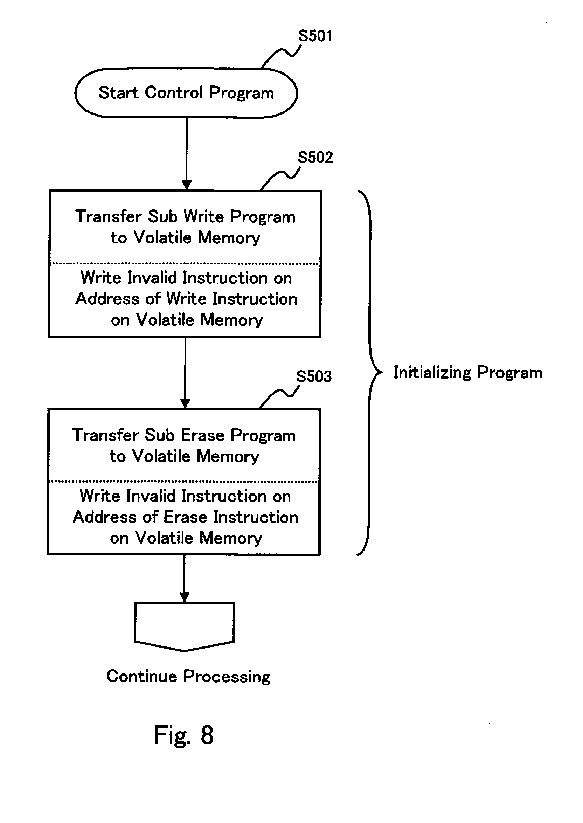

The operation of the control program by the CPU 1 will be described referring to Figs. 8 to 16.

Fig. 8 is a flowchart showing the operation of the initializing program at the time of starting execution of the control program stored on the nonvolatile memory 2, where the sub write program and the sub erase program stored on the nonvolatile memory 2 are transferred to the volatile memory 3.

After starting execution of the control program of the nonvolatile memory 2 (Step S501), the CPU 1 executes the initializing program for the nonvolatile memory 2, and transfers the sub write program for the nonvolatile memory 2 stored on the nonvolatile memory 2 to a predetermined area of the volatile memory 3 and stores it (Step S502). At this time, at the address in the volatile memory 3 where the write instruction for the nonvolatile memory 2 is to be stored, the write instruction is not written, but an invalid instruction is written. Here, the invalid instruction to be written is a software reset instruction for the CPU 1. Then, the sub erase program stored on the nonvolatile memory 2 is transferred to a predetermined area in the volatile memory 3 and is stored (Step S503). At this time, at the address in the volatile memory 3 where the erase instruction for the nonvolatile memory 2 is to be stored, the erase instruction is not written, but an invalid instruction is written. Here, the invalid instruction to be written is a software reset instruction for the CPU 1.

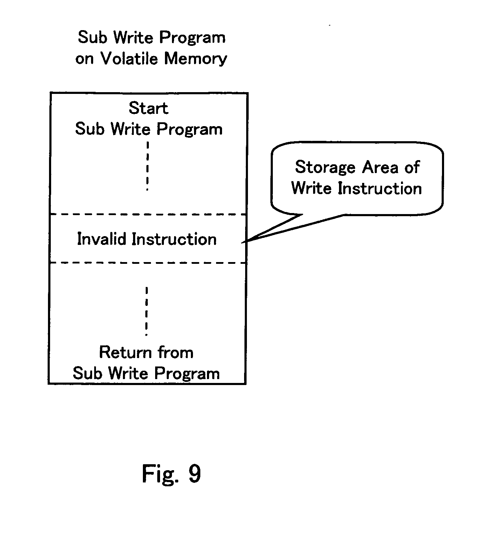

Fig. 9 illustrates a configuration of the sub write program transferred to and stored on the volatile memory 3 at Step S502. The sub write program is provided as a sub routine accessible from the write program stored on the nonvolatile memory 2. At this point, at the address in the volatile memory 3 where the write instruction for the nonvolatile memory 2 has to be stored, a software reset instruction for the CPU1 is provided as the invalid instruction.

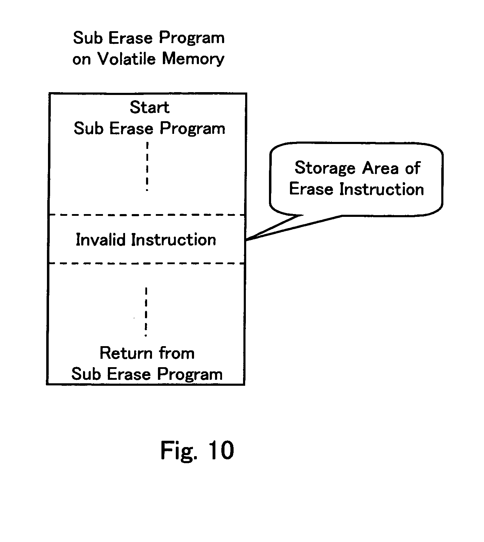

Fig. 10 illustrates a configuration of the sub erase program for the nonvolatile memory 2 transferred to and stored on the volatile memory 3 at Step S503. The sub erase program is provided as a sub routine accessible from the erase program stored on the nonvolatile memory 2. At this point, at the address in the volatile memory 3 where the erase instruction for the nonvolatile memory 2 has to be stored, a software reset instruction for the CPU1 is provided as the invalid instruction.

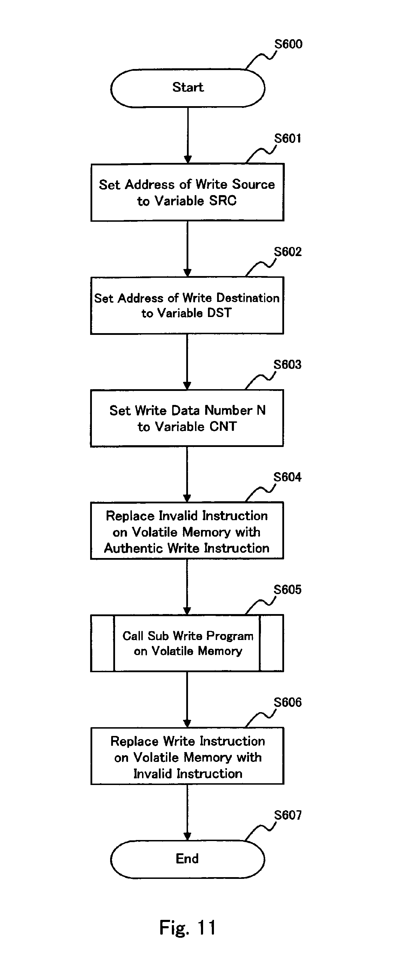

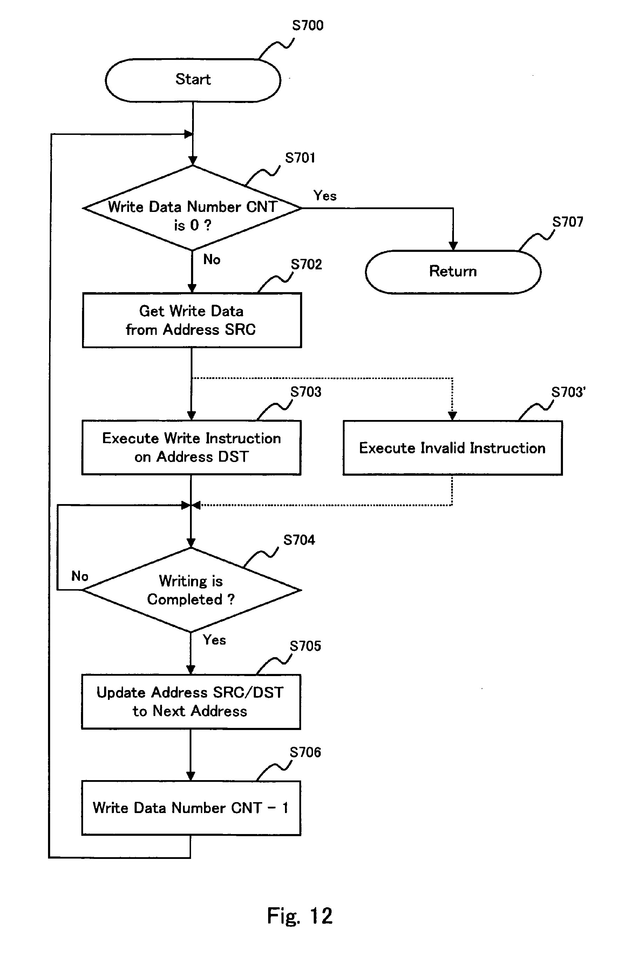

The action of writing data onto the nonvolatile memory 2 will be described referring to the flowcharts of Figs. 11 and 12.

Fig. 11 illustrates the operation of the write program included in the control program which is stored on the nonvolatile memory 2. First, the CPU 1 sets the initial address of the area, in which the data to be written is stored, to a variable SRC, according to the write program stored on the nonvolatile memory 2 (Step S601). Next, the CPU 1 sets the address on the nonvolatile memory 2, to which the data is to be written, to a variable DST (Step S602), and sets the number of the write data N to a variable CNT (Step S603).

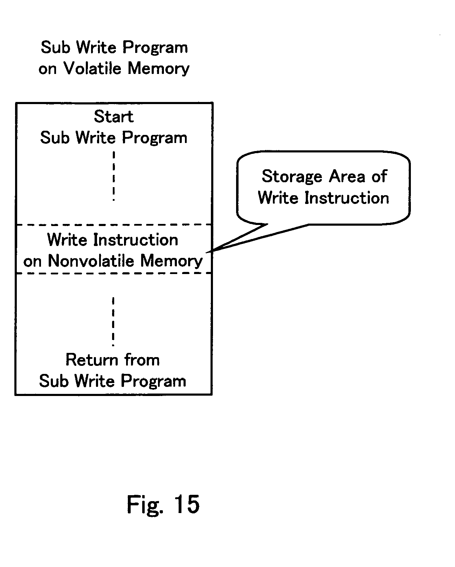

Then, the CPU 1 replaces with an authentic write instruction the software reset instruction for the CPU 1 already written as the invalid instruction at the address in the volatile memory 3 where the write instruction has to be stored (Step S604). Fig. 15 illustrates a configuration of the sub write program stored on the volatile memory 3 after the replacement of the instructions at Step S604. At this point, at the address in the volatile memory 3 where the write instruction has to be stored, the authentic write instruction is provided. After the replacement of the instructions, the CPU 1 accesses the sub write program stored on the volatile memory 3 shown in Fig. 12 (Step S605) and executes the sub write program stored on the volatile memory 3. After completing the execution of the sub write program, the CPU 1 replaces the authentic write program written in the volatile memory 3 with the software reset instruction for the CPU 1 provided as the invalid instruction (Step S606), and terminates the write program (Step S607).

Fig. 12 illustrates the operation of the sub write program previously transferred to the volatile memory 3 at Step S502. The CPU 1 first checks the number of the write data CNT (Step S701). When at Step S701, the number of the write data CNT is not zero, the write data is acquired from the area denoted by the address SRC where the data to be written is stored (Step S702). Then, the write instruction is executed on the address DST denoting the area to which the data is written in the nonvolatile memory 2, and the writing action of the data is started (Step S703). After confirming the completion of the writing action (Yes at Step S704), the CPU 1 updates the values of the addresses SRC and DST to values of next addresses to prepare for the next writing action. In the present embodiment, both the addresses SRC and DST are increased by one (Step S705). Also, the number of the write data CNT is decreased by one (Step S706), and the procedure transits to Step S701 and the subsequent processing is continued. When the CPU 1 determines at Step S701 that all the data has been written with the number of the write data CNT turned to zero, the sub write program is terminated (Step S707).

Next, the case where the CPU 1 erroneously operates and the program incorrectly branches to a region on the volatile memory 3 including the area where the sub write program is stored will be described.

In this case, the write program on the nonvolatile memory 2 is branched to any of the regions on the volatile memory 3 while the write program on the nonvolatile memory 2 is not correctly executed and the replacement of the instructions in the write program at Step S604 shown in Fig. 11 is not executed. At this time, the configuration of the sub write program on the volatile memory 3 is the one shown in Fig. 9, where, at the address in the volatile memory 3 where the write instruction has to be stored, the software reset instruction for the CPU 1 is provided as the invalid instruction. Therefore, in the flowchart of Fig. 12, when the program is branched to the volatile memory 3 by the running away of the CPU 1, the writing action at Step S703 is not executed, and the invalid instruction is actually executed at Step S703'. Since the software reset instruction for the CPU 1 is written as the invalid instruction, a reset occurs, and the writing action on the nonvolatile memory 2 is not executed. Thereby, the erroneous writing action on the nonvolatile memory 2 can be prevented.

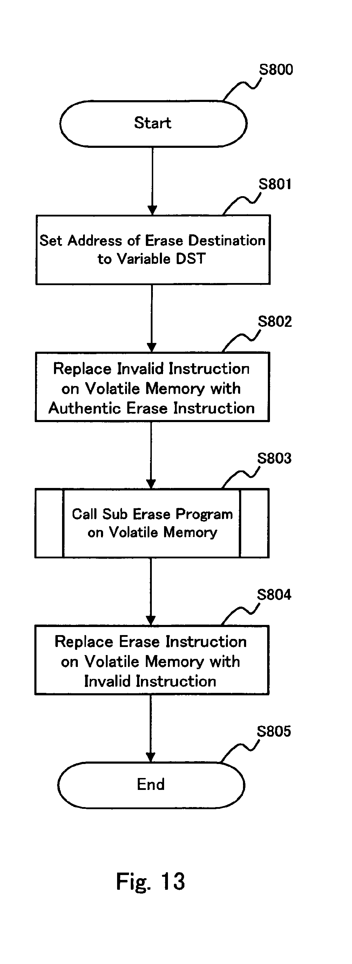

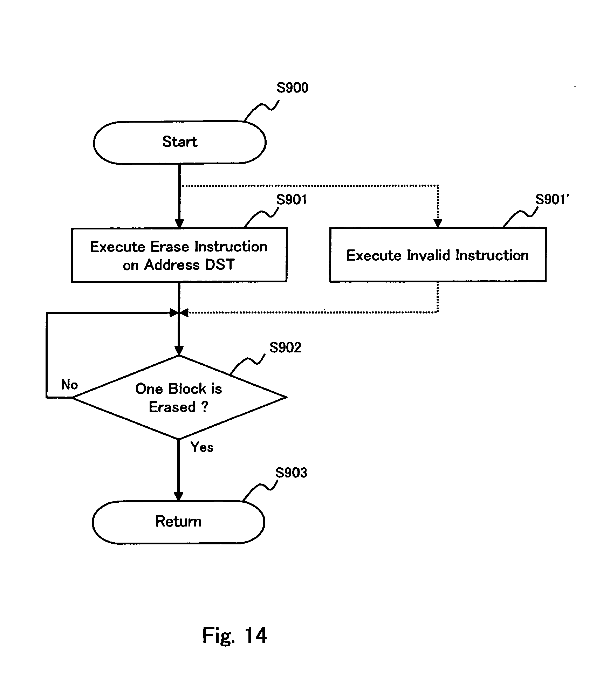

The action of erasing the data on the nonvolatile memory 2 will now be described referring to flowcharts shown in Figs. 13 and 14. Fig. 13 illustrates the operation of the erase program included in the control program stored on the nonvolatile memory 2. According to the erase program stored on the nonvolatile memory 2, the CPU1 sets the address of the area to be erased on the nonvolatile memory 2 to a variable DST (Step S801).

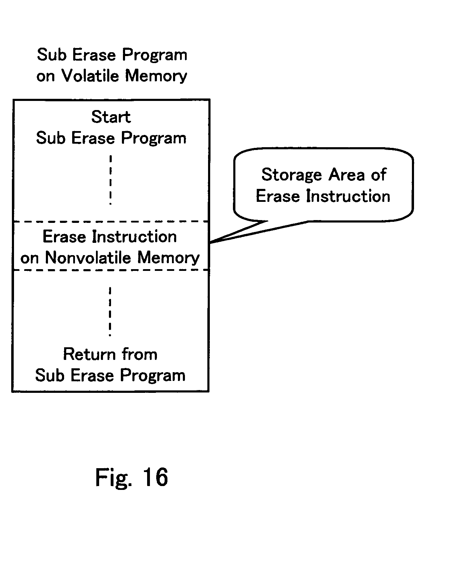

Then, the CPU 1 replaces with an authentic erase instruction the software reset instruction for the CPU 1 already written as the invalid instruction at the address in the volatile memory 3 where the erase instruction has to be stored (Step S802). Fig. 16 illustrates a configuration of the sub erase program stored on the volatile memory 3 after the replacement of the instructions at Step S802. At this point, at the address in the volatile memory 3 where the erase instruction has to be stored, the authentic erase instruction is provided. After the replacement of the instruction, the CPU 1 accesses the sub erase program on the volatile memory 3 shown in Fig. 14 (Step S803) and executes the sub erase program stored on the volatile memory 3. After the completion of execution of the sub erase program, the CPU 1 replaces the authentic erase instruction written in the volatile memory 3 with the software reset instruction for the CPU 1 provided as the invalid instruction (Step S804), and the erase program is terminated (Step S805).

Fig. 14 illustrates the operation of the sub erase program previously transferred to the volatile memory 3 at Step S503. The CPU 1 executes the erase instruction on the address DST on the nonvolatile memory 2 denoting the area where the data is to be erased, and starts the erasing action of the data (Step S901). When confirming the completion of the erasing action (Yes at Step S902), the CPU 1 terminates the sub erase program (Step S903).

Next, the case where the CPU 1 erroneously operates by some reason and the program is branched to a region on the volatile memory 3 including the area where the sub erase program is stored will be described.

In this case, the program is branched to any of the regions on the volatile memory 3 while the replacement of the instruction in the erase program at Step S802 shown in Fig. 13 is not executed. At this time, the configuration of the sub erase program on the volatile memory 3 is the one as shown in Fig. 10, where, at the address in the volatile memory 3 where the erase instruction has to be stored, the software reset instruction for the CPU 1 is provided as the invalid instruction. Therefore, in the flowchart shown in Fig. 14, when the program is branched to the volatile memory 3 by the running away of the CPU 1, the erasing instruction at Step S901 is not executed, and the invalid instruction at Step S901' is executed. Since the software reset instruction for the CPU 1 is written as the invalid instruction, a reset occurs and the erasing action on the nonvolatile memory 2 is not executed. Thereby, the erroneous erasing action on the nonvolatile memory 2 can be prevented.

### (Other Embodiments)

Although at Steps S502 and S503 shown in Fig. 8, at Step S606 shown in Fig. 11, and at Step S804 shown in Fig. 13, as the invalid instructions to be written at the address in the volatile memory 3 where the write instruction and the erase instruction have to be stored, the software reset instructions for the CPU 1 is applied in the above described embodiment, any other instructions that can be executed by the CPU 1 may be suitably applied. The other instructions that can be executed by the CPU 1 include, for example, a non-operational instruction such as an NOP of the CPU 1, and an undefined instruction for the CPU 1.

The case where a non-operational instruction is used as the invalid instruction will be described. When the CPU 1 runs away and the program is branched to the area of the sub write program for the volatile memory 3, the nonvolatile memory 2 is not operated at Step 5703' shown in Fig. 12 and the procedure goes on to the next step. Similarly, when the CPU 1 runs away and the program is branched to the area of the sub erase program for the volatile memory 3, the nonvolatile memory 2 is not operated at Step S901' shown in Fig. 14 and the procedure goes on to the next step. Accordingly, when the non-operational instruction is used as the invalid instruction, likewise in the case where the software reset instruction is used as the invalid instruction, the erroneous writing action and erasing action on the nonvolatile memory 2 can be prevented.

Another case where an undefined instruction for the CPU 1 is used as the invalid instruction will be explained. When the CPU 1 runs away and the program is branched to the area of the sub write program for the volatile memory 3, the nonvolatile memory 2 is not operated at Step S703' shown in Fig. 12, and an execution error of the undefined instruction is detected. Similarly, when the CPU 1 runs away and the program is branched to the area of the sub erase program for the volatile memory 3, the nonvolatile memory 2 is not operated at Step S901' shown in Fig. 14 and an execution error of the undefined instruction is detected. Accordingly, when the undefined instruction is used as the invalid instruction, likewise in the case where the software reset instruction is used as the invalid instruction, the erroneous writing action and erasing action on the nonvolatile memory 2 can be prevented.

The nonvolatile memory system according to the present invention may be suitably applied to a system which includes a plurality of nonvolatile memories, volatile memories, or arithmetic processing devices. The present invention is also applicable to the case in which these configurations are mounted on a plurality of systems.

### INDUSTRIAL APPLICABILITY

The nonvolatile memory system according to the present invention is can be used in a nonvolatile memory system which comprises a nonvolatile memory, a volatile memory for storing programs including an operational instruction to alter a content of the nonvolatile memory, and an arithmetic processing device for controlling the nonvolatile memory and the volatile memory.

## Claims

1. A nonvolatile memory system comprising:
a nonvolatile memory;
a volatile memory for storing programs including an operational instruction to alter a content of the nonvolatile memory;
an arithmetic processing device for controlling the nonvolatile memory and the volatile memory;
a first invalid instruction writing means for writing an invalid instruction in place of the operational instruction at a specific address in the volatile memory for storing the operational instruction for the nonvolatile memory at the time of initialization;
a controlling means for writing the operational instruction at the specific address in the volatile memory where the invalid instruction is stored before starting an operation on the nonvolatile memory and operating the nonvolatile memory according to the operational instruction; and
a second invalid instruction writing means for writing the invalid instruction at the specific address in the volatile memory after operating the nonvolatile memory

2. The nonvolatile memory system according to claim 1, wherein
the program includes a write instruction for the nonvolatile memory, and the first invalid instruction writing means and the second invalid instruction writing means write the invalid instruction at the specific address in the volatile memory where the write instruction is stored.

3. The nonvolatile memory system according to claim 1 or 2, wherein
the program includes an erase instruction for the nonvolatile memory, and the first invalid instruction writing means and the second invalid instruction writing means write the invalid instruction at the specific address in the volatile memory where the erase instruction is stored.

4. The nonvolatile memory system according to claim 1 or 2, wherein
the invalid instruction is an instruction for resetting the arithmetic processing device.

5. The nonvolatile memory system according to claim 1 or 2, wherein
the invalid instruction is a no operation instruction for the arithmetic processing device.

6. The nonvolatile memory system according to claim 1 or 2, wherein
the invalid instruction is an undefined instruction for the arithmetic processing device.

7. A control program executable by the arithmetic processing device of the nonvolatile memory system according to claim 1 comprising:
a first invalid instruction writing step for writing an invalid instruction in place of the operational instruction at a specific address in the volatile memory for storing the operational instruction for the nonvolatile memory at the time of initialization;
a controlling step for writing the operational instruction at the specific address in the volatile memory where the invalid instruction is stored before starting an operation on the nonvolatile memory and operating the nonvolatile memory according to the operational instruction; and
a second invalid instruction writing step for writing the invalid instruction at the specific address in the volatile memory after operating the nonvolatile memory
